# DEMANDE DE BREVET EUROPEEN

(11) **EP 4 738 192 A2**
(43) Date de publication de la demande: **06.05.2026**
(21) Numéro de dépôt: 26166286.0
(22) Date de dépôt: 21.12.2023
(51) Int. Cl.: G06K 19/10

(54) **PIECE D HORLOGERIE OU DE JOAILLERIE COMPRENANT UN CODAGE D'IDENTIFICATION**

(30) Priorité: 03.01.2023 CH 62023; 22.02.2023 CH 1762023
(62) Demande divisionnaire de: 23219468.8
(71) Demandeur: Richemont International S.A., 1752 Villars-sur-Glâne (CH)
(72) Inventeur: HEREDIA, Stéphane, 1262 Eysins (CH); THEYTAZ, Olivier, 1073 Savigny (CH); GAGNEBIN, Marc-Henri, 1290 Versoix (CH); MORIN, Kevin, 74520 Vulbens (CH)
(74) Mandataire: Novagraaf International SA

(57) **Abrégé**

Pièce d'horlogerie ou de joaillerie (10) comprenant au moins une marque gravée (20), caractérisée en ce que la marque gravée (20) comprend au moins :
- une première zone gravée à une première profondeur (P1),
- une deuxième zone gravée à une deuxième profondeur (P2),
la première profondeur (P1) et la deuxième profondeur (P2) formant des valeurs discrètes d'un codage d'identification de la pièce d'horlogerie ou de joaillerie (10).

## Description

### Domaine technique de l'invention

La présente invention concerne de manière générale le domaine de l'horlogerie ou de la joaillerie, et en particulier, la présente invention concerne des aspects d'identification, de traçabilité, ou de lutte anti-contrefaçon pour des pièces à porter par un utilisateur, comme des pièces de l'industrie du luxe, comme des pièces d'horlogerie ou de joaillerie, des instruments d'écriture, des articles de bagagerie.

### État de la technique

Il est connu dans l'art antérieur de pouvoir graver des pièces d'horlogerie ou de joaillerie pour appliquer des codes d'identification sur ces pièces d'horlogerie ou de joaillerie. Le document EP1969530A1 décrit des pièces d'horlogerie ou de joaillerie avec un code barre à deux dimensions. En contrepartie, ce code barre à deux dimensions doit être le plus petit possible et/ou positionné à un endroit peu ou non visible, pour ne pas affecter l'aspect visuel des pièces d'horlogerie ou de joaillerie (ce dernier critère étant particulièrement important pour des pièces d'horlogerie ou de joaillerie de luxe). De telles contraintes de taille ou de positionnement compliquent la fabrication et/ou l'identification ultérieure. Le document WO200778934A2 se rapporte à des procédés et des dispositifs pour protéger des produits de la contrefaçon, et des procédés et dispositifs pour doter un objet d'une protection contre la contrefaçon. Le document US20190286866A1 concerne un procédé de formation d'un élément de reconnaissance et/ou d'une identification infalsifiable sur une surface partielle d'un composant ou d'un produit.

### Exposé de l'invention

Un but de la présente invention est de répondre aux inconvénients de l'art antérieur mentionnés ci-dessus et en particulier, tout d'abord, de proposer des pièces d'horlogerie ou de joaillerie avec un codage d'identification dont la fabrication et/ou la lecture ultérieure est simple et rapide, et/ou dont la présence n'affecte pas l'aspect visuel extérieur des pièces d'horlogerie ou de joaillerie en cause.

Pour cela un premier aspect de l'invention concerne une pièce à porter par un utilisateur comme une pièce d'horlogerie ou de joaillerie comprenant au moins une marque gravée, caractérisée en ce que la marque gravée comprend au moins :
- une première zone gravée à une première profondeur,
- une deuxième zone gravée à une deuxième profondeur,
dans laquelle :
- la première profondeur et la deuxième profondeur et/ou
- un changement de profondeur entre la première profondeur et la deuxième profondeur,
forme(nt) des valeurs discrètes d'un codage d'identification de la pièce d'horlogerie ou de joaillerie. Selon la mise en œuvre ci-dessus, la pièce d'horlogerie ou de joaillerie comprend une gravure avec au moins deux profondeurs qui forment des valeurs discrètes d'un codage d'identification, et/ou dont les transitions de profondeur forment des valeurs discrètes d'un codage d'identification. Autrement dit, la même zone ou marque gravée comprend une partie gravée à une première profondeur et une autre partie gravée à une deuxième profondeur, ce qui forme un codage. On peut affecter chaque profondeur ou chaque changement de profondeur, ou chaque sens de changement de profondeur à une valeur de codage (pour former par exemple un codage binaire avec deux profondeurs), et on peut prévoir d'alterner les deux profondeurs pour procurer une valeur codée complexe. On peut noter que les valeurs de profondeurs sont différentes et discrètes, pour éviter toute confusion lors de la lecture ultérieure. On peut noter que le codage d'identification est construit ou basé sur les différences de profondeurs de gravure, et cela permet d'être indépendant de la surface de base qui peut être érodée, usée ou ultérieurement polie dans le cas d'un service chez un horloger par exemple.

La pièce à porter par un utilisateur, comme une pièce d'horlogerie ou de joaillerie, peut être en outre définie par les caractéristiques suivantes, prises individuellement ou en combinaison.

Selon un mode de réalisation, la pièce à porter par un utilisateur peut être une pièce manufacturée, en particulier un article de luxe, une pièce d'horlogerie ou de joaillerie, un instrument d'écriture, un briquet, un article de maroquinerie comme un sac à main, une malle ou un bagage. Selon un mode de réalisation, la pièce à porter par un utilisateur peut comprendre une partie visible de l'utilisateur gravée ou à graver, comme une partie métallique, en matière synthétique, en céramique, en composite.

Selon un mode de réalisation, la première zone gravée et la deuxième zone gravée :
- sont formées dans une même matière de la pièce d'horlogerie ou de joaillerie, et/ou
- débouchent sur une même matière de la pièce d'horlogerie ou de joaillerie, et/ou
- présentent un fond de la même couleur de la pièce d'horlogerie ou de joaillerie, et/ou
- sont formées sur un même composant de la pièce d'horlogerie ou de joaillerie. Autrement dit, il n'y a aucune différence de couleur ou d'aspect entre la première zone gravée et la deuxième zone gravée, si bien que la zone ou marque gravée peut être agencée sur une partie visible de la pièce d'horlogerie ou de joaillerie sans que cela n'affecte l'aspect général de la pièce d'horlogerie ou de joaillerie.

Selon un mode de réalisation, la première profondeur et la deuxième profondeur présentent une différence de profondeur comprise dans une plage de valeurs allant de 50 µm à 5 µm, de préférence de 50 µm à 15 µm, de préférence de 50 µm à 40 µm, de préférence de 40 µm à 30 µm, de préférence de 30 µm à 20 µm, de préférence de 20 µm à 10 µm, de préférence de 15 µm à 5 µm, de préférence de 10 µm à 5 µm. On peut envisager d'autres valeurs de différences de profondeurs. On peut envisager de mesurer la première profondeur et la deuxième profondeur avec un profilomètre. On peut prévoir d'utiliser un profilomètre avec une touche ou un palpeur de contact, et/ou on peut prévoir d'utiliser un profilomètre sans contact, comme par exemple un profilomètre laser ou un profilomètre optique. Ces appareils présentent une précision suffisante pour détecter les différences de profondeur ci-dessus, ces différences de profondeur n'étant par ailleurs pas visibles ou pas détectables à l'œil nu.

Selon un mode de réalisation, le codage d'identification peut être construit sur les valeurs absolues de la première profondeur de gravure et de la deuxième profondeur de gravure.

Selon un mode de réalisation, le codage d'identification peut être construit sur les variations de profondeur entre la première profondeur de gravure et la deuxième profondeur de gravure, c'est-à-dire sur les changements de profondeur de gravure, et en particulier sur les fronts (ou flancs) montants ou descendants de la marque gravée formés entre la première profondeur de gravure et la deuxième profondeur de gravure.

Selon un mode de réalisation, la profondeur de gravure peut être de l'ordre 0,060 mm à 0,100 mm.

Selon un mode de réalisation, la profondeur minimale de gravure peut être de la moitié de la largeur de la gravure.

Selon un mode de réalisation, la profondeur maximale de gravure peut être de 1.5 fois la largeur de la gravure.

Selon un mode de réalisation, la marque gravée comprend des signes visuels distincts, tels que des caractères ou logos distincts, et dans laquelle :
- la première zone gravée forme ou fait partie d'un premier signe visuel,
- la deuxième zone gravée forme ou fait partie d'un deuxième signe visuel. On peut par exemple prévoir de graver un nom de marque et affecter une profondeur à chaque caractère. Si on prend un mot de huit lettres, et si on prévoit de pouvoir utiliser deux profondeurs de gravure pour chaque lettre, on obtient deux cent cinquante six possibilités différentes de codage.

Selon un mode de réalisation, la marque gravée comprend au moins un signe visuel unitaire, tel qu'un caractère unitaire ou un logo unitaire, et la première zone gravée est adjacente à la deuxième zone gravée, la première zone gravée et la deuxième zone gravée formant au moins partiellement le signe visuel unitaire. On peut par exemple prévoir de graver un signe ou un logo particulier et on peut prévoir de découper le signe ou le logo en secteurs, et affecter une profondeur à chaque secteur. Si on prend huit secteurs, et si on prévoit de pouvoir utiliser deux profondeurs de gravure pour chaque secteur, on obtient deux cent cinquante six possibilités différentes de codage.

Selon un mode de réalisation, la première zone gravée est séparée de la deuxième zone gravée par une démarcation suivant un motif prédéterminé formant un codage supplémentaire. On peut prévoir d'agencer la première zone gravée et la deuxième zone gravée pour reproduire un schéma ou un motif de gravure spécifique qui forme en lui-même un codage spécifique.

Selon un mode de réalisation, la marque gravée présente un maillage spatial prédéterminé défini par des zones frontières de mailles séparant des mailles de gravure, et le codage d'identification est défini par des changements de profondeur de gravure, et/ou par des sens de changement de profondeur de gravure, dans les zones frontières de maille, et de préférence dans laquelle au moins une partie du codage d'identification est définie uniquement par des changements de profondeur, et/ou par des sens de changement de profondeur de gravure dans les zones frontières de maille. Autrement dit, les changements de profondeurs sont formés à des endroits précis, et seuls les changements de profondeurs à ces endroits précis sont pris en compte : on peut ajouter des changements de profondeurs intermédiaires (c'est-à-dire hors des zones frontières), ceux-ci seront ignorés pour reconstruire le codage d'identification. La compréhension du codage d'identification et sa contrefaçon sont encore plus complexes. En d'autres termes, seuls sont pris en compte les changements de profondeurs espacés d'un pas prédéterminé (ou d'une période spatiale prédéfinie). Le pas peut être fixe, mais on peut aussi prévoir un pas variable, c'est-à-dire que les mailles ont des dimensions variables, mais prédéfinies à l'avance pour pouvoir scruter à des endroits prédéterminés.

Selon un mode de réalisation, le changement de profondeur peut être prévu à un endroit prédéterminé pour chaque maille, et cet endroit prédéterminé pour chaque maille peut être variable au moins entre deux mailles adjacentes du maillage spatial, ce qui constitue un codage supplémentaire à celui déjà conféré par les différentes profondeurs de gravure. Autrement dit, le changement de profondeur de la gravure peut advenir à différents endroits de chaque maille, et peut être variable au moins entre deux mailles adjacentes. Ainsi, la localisation du changement de profondeur dans la maille constitue un codage supplémentaire. En d'autres termes, la position relative de la gravure ou du changement de profondeur de gravure dans la maille peut varier d'une maille à l'autre. A titre d'exemple explicatif, si la maille est par exemple carrée, on peut prévoir de prendre en compte une première valeur de codage si une première gravure de codage ou une première variation de gravure est effectuée dans un coin supérieur gauche du premier carré, et de prendre en compte une deuxième valeur de codage si une deuxième gravure de codage ou une deuxième variation de gravure est effectuée dans un coin supérieur droit du deuxième carré. On peut ensuite considérer le centre ou un coin du côté inférieur. Avec un tel codage spatial effectué dans une direction différente de la direction de la profondeur de gravure, on augmente encore la complexité du code d'identification. Bien entendu, on peut faire varier la taille de la maille, voire même la forme, et on peut prévoir deux, ou trois ou encore plus de profondeurs différentes de gravure pour former le codage complet de la pièce à porter par un utilisateur. On peut combiner :
- un codage basé sur la profondeur de la maille elle-même sur la base d'un code binaire ou avec 3 niveaux de profondeur, ou même plus, et/ou
- un codage basé sur la position de ce changement de profondeur par un marquage localisé en fonction du découpage spatial de la maille, et/ou
- un codage basé sur la profondeur du changement local de profondeur.

Selon un mode de réalisation, on peut prévoir de graver ou marquer des caractères, des lettres, des signes pour former des mots, un logo, une marque, au moins un caractère, lettre, ou signe formant une première zone gravée et au moins un autre caractère, lettre, ou signe formant une deuxième zone gravée, et on peut prévoir de procurer un codage supplémentaire prédéterminé en faisant en sorte que :
- l'une de la première zone gravée et de la deuxième zone gravée présente une première taille et/ou une première position (en X, Y ou Z sur l'article marqué) et/ou une première orientation, et
- l'autre de la première zone gravée et de la deuxième zone gravée présente une deuxième taille et/ou une deuxième position (en X, Y ou Z sur l'article marqué) et/ou une deuxième orientation.
On peut aussi prévoir un espacement variable prédéterminé entre les caractères, lettres, ou signes constitutifs du marquage pour procurer un codage supplémentaire prédéterminé.

Selon un mode de réalisation, la marque gravée présente un maillage spatial prédéterminé défini par des zones frontières de mailles séparant des mailles de gravure, et dans laquelle une position relative dans chaque maille de la première zone gravée à une première profondeur et/ou de la deuxième zone gravée à une deuxième profondeur procure un codage supplémentaire.

Selon un mode de réalisation, le maillage spatial prédéterminé présente une maille de gravure de départ définie par :
- une surface de gravure prédéterminée de départ, et/ou
- une profondeur de gravure prédéterminée de départ et/ou
- une séquence de changements de profondeur de gravure prédéterminée de départ, et/ou
- un motif de gravure prédéterminé de départ. Une telle maille de gravure de départ permet de positionner ensuite les zones frontières attendues lors de la mesure des profondeurs de gravure pour la reconstruction du codage d'identification.

Selon un mode de réalisation :
- la première zone gravée forme une marque de référence,
- une position relative de la deuxième zone gravée par rapport à la première zone gravée procure au moins une partie du codage d'identification. Selon cette mise en œuvre, au moins une partie du codage d'identification peut être basée sur la position relative entre la deuxième zone gravée et la première zone gravée, ce qui forme en quelque sorte un codage spatial. Selon ce mode de réalisation, il n'y a pas besoin de maille ni de zones frontières, la première zone gravée formant une marque de référence autour de laquelle une deuxième zone gravée donne un code particulier en fonction de sa position. Par exemple, le long de la marque gravée, on peut prévoir une série de premières zones gravées, et pour chaque première zone gravée, on peut prévoir une deuxième zone gravée dont la position relative par rapport à chaque première zone gravée respective change, ce qui définit ainsi un codage. La position relative peut être définie par rapport à un sens de lecture le long de la marque gravée, ou définie par un motif de référence ou de départ.

Selon un mode de réalisation, la marque gravée comprend au moins une troisième zone gravée à une troisième profondeur formant une valeur discrète du codage d'identification de la pièce d'horlogerie ou de joaillerie. Une telle mise en œuvre augmente encore les possibilités de codage. On peut prévoir encore plus de profondeurs de gravure. On peut bien entendu combiner cette mise en œuvre avec celles ci-dessus utilisant un maillage spatial, avec une variation de la position de la zone gravée entre les différentes mailles.

Selon un mode de réalisation, la marque gravée comprend :
- une pluralité de premières zones gravées à la première profondeur et séparées par au moins une deuxième zone gravée à la deuxième profondeur, et/ou
- une pluralité de deuxièmes zones gravées à la deuxième profondeur et séparées par au moins une première zone gravée à la première profondeur.

Selon un mode de réalisation, la première profondeur est distincte de la deuxième profondeur.

Selon un mode de réalisation, la première zone gravée et/ou la deuxième zone gravée est formée par une gravure laser. On peut prévoir une gravure avec un laser nanoseconde, picoseconde, femtoseconde, on peut prévoir une longueur d'onde rouge ou verte, infra rouge (cristaux ND-YAG). On peut prévoir plusieurs lignes parallèles de gravure. Lors de la gravure, on peut réaliser plusieurs lignes de gravure avec un espacement inférieur à une taille de faisceau (15 µm par exemple) pour réaliser un recouvrement dans l'ablation de matière. Cette opération peut être réalisée plusieurs fois avec des angles différents (par exemple 0°, 30°, 45° par rapport à une direction de base) pour obtenir la profondeur la plus homogène possible sur la zone à graver.

Selon un mode de réalisation, la première zone gravée et/ou la deuxième zone gravée est formée par une gravure par électroérosion.

Selon un mode de réalisation, la première zone gravée et/ou la deuxième zone gravée est formée par une gravure chimique (on peut prévoir des étapes de masquage pour la première zone gravée et/ou la deuxième zone gravée telles que masquage de la pièce hors zones à graver, première gravure chimique jusqu'à une première profondeur, masquage des zones de gravure devant rester à la première profondeur, deuxième gravure chimique jusqu'à une deuxième profondeur).

Selon un mode de réalisation, la première zone gravée et/ou la deuxième zone gravée est formée par une opération de déformation plastique par forgeage ou pressage (poinçonnage). On peut prévoir une opération de déformation plastique. En particulier, on peut prévoir une gravure effectuée par un marquage à chaud sur du cuir ou tout autre matière naturelle ou synthétique par exemple. On peut prévoir un marquage plus ou moins prononcé ou avec un poinçon à plusieurs niveaux pour procurer/former la première zone gravée et/ou la deuxième zone gravée.

Selon un mode de réalisation, on peut prévoir plusieurs marques gravées, avec des gravures réalisées avec des technologies différentes et/ou avec des gravures réalisées avec des itérations de technologies différentes.

Selon un mode de réalisation, on peut prévoir plusieurs marques gravées, avec des gravures réalisées avec des technologies différentes et/ou avec des gravures réalisées avec des itérations de technologies différentes.

Selon un mode de réalisation, la pièce d'horlogerie ou de joaillerie comprend une pièce métallique et la première zone gravée et la deuxième zone gravée sont formées sur la pièce métallique. On peut aussi prévoir de la céramique, des matériaux amorphes, des matières composites...

Selon un mode de réalisation, la première zone gravée et la deuxième zone gravée sont formées sur une partie de la pièce d'horlogerie ou de joaillerie visible par un utilisateur. Autrement dit, la marque gravée peut être apposée sur une surface externe de la pièce d'horlogerie ou de joaillerie.

Selon un mode de réalisation, le codage d'identification de la pièce d'horlogerie ou de joaillerie formé par la première profondeur et la deuxième profondeur est invisible à l'œil nu pour l'utilisateur.

Un deuxième aspect de l'invention concerne un procédé d'authentification d'une pièce d'horlogerie ou de joaillerie, comprenant les étapes consistant à :
- fournir une pièce d'horlogerie ou de joaillerie selon le premier aspect de l'invention,
- faire une mesure de profondeur de gravure sur ou le long de la marque gravée, de sorte à identifier au moins une alternance de la première profondeur et la deuxième profondeur pour reconstruire un codage d'identification lu sur la pièce d'horlogerie ou de joaillerie,
- comparer le codage d'identification lu sur la pièce d'horlogerie ou de joaillerie avec un codage d'identification attendu, et/ou rechercher le codage d'identification lu sur la pièce d'horlogerie ou de joaillerie parmi des codages d'identification stockés dans une base de données.

### Description des figures

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
[fig. 1] représente une vue générale d'une pièce d'horlogerie comprenant une marque gravée selon l'invention ;
[fig. 2] représente une première mise en œuvre de gravure permettant de former un codage d'identification ;
[fig. 3] représente une deuxième mise en œuvre de gravure permettant de former un codage d'identification ;
[fig. 4] représente une troisième mise en œuvre de gravure permettant de former un codage d'identification ;
[fig. 5] représente une quatrième mise en œuvre de gravure permettant de former un codage d'identification ;
[fig. 6] représente une cinquième mise en œuvre de gravure permettant de former un codage d'identification ;
[fig. 7] représente une sixième mise en œuvre de gravure permettant de former un codage d'identification ;
[fig. 8] représente un exemple de pièce gravée selon la sixième mise en œuvre de gravure ;
[fig. 9] représente une septième mise en œuvre de gravure permettant de former un codage d'identification.

### Description détaillée de mode(s) de réalisation

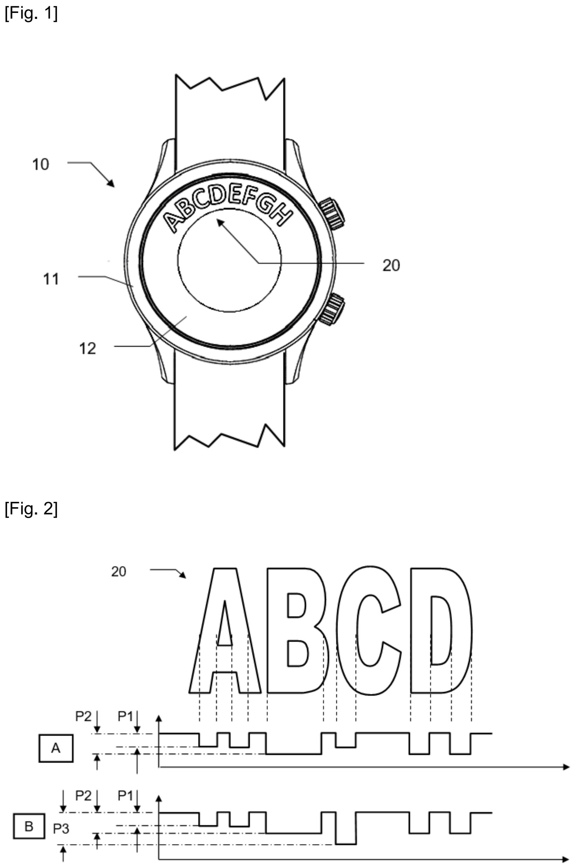

La figure 1 représente une pièce d'horlogerie 10 comprenant notamment une carrure 11 et un fond 12, sur lequel une marque gravée 20 est prévue. Dans cet exemple, la marque gravée comprend huit caractères « ABCDEFGH », mais on peut prévoir un logo, une image, une forme géométrique (un rond, un carré...), plus ou moins de caractères, avec des polices différentes. On peut aussi prévoir que la marque gravée 20 soit sur une autre partie de la pièce d'horlogerie (le flanc de la carrure, le cadran, une partie du mouvement comme un pont ou une platine visible par exemple au travers d'un fond transparent d'une montre...). On peut aussi prévoir de marquer une pièce de joaillerie ou un bijou ou tout autre article de luxe comprenant une pièce adaptée à la gravure.

La figure 2 représente une première mise en œuvre de gravure permettant de former un codage d'identification de la pièce d'horlogerie 10. La marque gravée 20 comprend ici quatre caractères, et selon une première possibilité indiquée A, il est proposé de graver certains caractères à une première profondeur de gravure P1, et d'autres caractères à une deuxième profondeur de gravure P2. Selon une deuxième possibilité indiquée B, on peut prévoir de graver certains caractères à une première profondeur de gravure P1, d'autres caractères à une deuxième profondeur de gravure P2, et encore d'autres caractères à une troisième profondeur de gravure P3. La première profondeur de gravure P1, la deuxième profondeur de gravure P2, et la troisième profondeur de gravure P3 forment des valeurs discrètes et distinctes.

On peut effectuer la gravure par tout procédé connu, et en particulier, on peut prévoir une gravure mécanique (par forgeage), ou une gravure chimique (par attaque chimique au travers d'un masque, pendant un temps donné), ou une gravure par électroérosion, ou encore plus préférentiellement on peut prévoir une gravure laser.

Dans le cas d'une gravure laser, on peut utiliser un laser qui émet des impulsions d'une durée de l'ordre de la picoseconde, de la nanoseconde, ou même de la femtoseconde. On peut prévoir d'utiliser un laser avec toute longueur d'onde connue, dans le domaine visible, ou infrarouge. On peut prévoir de faire une gravure laser en définissant des lignes de passage, qui peuvent quadriller la zone à graver. On peut prévoir de définir de lignes de passage parallèles et/ou croisées pour obtenir un état de surface uniforme.

En ce qui concerne la profondeur de gravure, on peut prévoir que la première profondeur de gravure P1, la deuxième profondeur de gravure P2, et la troisième profondeur de gravure P3 sont chacune comprises dans une plage de valeurs allant de 30 µm à 200 µm, et de préférence de 60 µm à 100 µm. Cependant, et comme vu ci-dessus, la première profondeur de gravure P1, la deuxième profondeur de gravure P2, et la troisième profondeur de gravure P3 forment des valeurs discrètes et distinctes, et on peut prévoir à chaque fois que la différence de profondeur de gravure entre deux profondeurs de gravure est comprise dans une plage de valeurs allant de 50 µm à 5 µm, de préférence de 50 µm à 40 µm, de préférence de 40 µm à 30 µm, de préférence de 30 µm à 20 µm, de préférence de 20 µm à 10 µm, de préférence de 15 µm à 5 µm, de préférence de 10 µm à 5 µm.

En ce qui concerne la mesure de la profondeur de gravure, on peut prévoir d'utiliser tout moyen connu et en particulier on peut prévoir d'utiliser un profilomètre, par exemple un profilomètre mécanique avec une touche ou un palpeur mécanique, on peut prévoir de préférence un profilomètre sans contact, comme un profilomètre laser ou un profilomètre optique. En référence aux différences de profondeurs mentionnées ci-dessus, de tels moyens de mesure permettent de distinguer des zones gravées à la première profondeur de gravure P1, ou à la deuxième profondeur de gravure P2, ou encore à la troisième profondeur de gravure P3, mais ces différences ne sont pas perceptibles par un œil humain, si bien que l'aspect de la pièce d'horlogerie et en particulier l'aspect de la marque gravée n'est pas affecté par la présence du codage d'identification.

Ainsi, et comme le montre la figure 2 pour la ligne de niveau identifiée par l'étiquette A, l'altitude de la surface de la pièce d'horlogerie 10 varie entre le niveau supérieur non gravé, la première profondeur P1 (par exemple 70 µm) pour les caractères A et C, et la deuxième profondeur P2 (par exemple 80 µm) pour les caractères B et C. Un codage d'identification binaire peut ainsi être construit, avec chaque caractère qui forme une unité binaire de quantité d'information (un bit) pouvant avoir deux valeurs : on peut assigner la première profondeur P1 à un premier niveau 0, et la deuxième profondeur P2 à un deuxième niveau 1. Sur l'exemple de la figure 2, pour l'option A, on obtient le codage d'identification suivant : 0101. Pour quatre caractères comme sur la figure 2, on peut proposer 16 possibilités de codage. Pour les huit caractères de la figure 1, on peut proposer 256 possibilités de codage.

L'option B de la figure 2 représente le cas de figure où on propose trois profondeurs de gravure distinctes (par exemple P1 = 70 µm, P2 = 80 µm, et P3 = 90 µm) pour augmenter le nombre de possibilités de codage. Sur l'exemple de la figure 2, pour l'option B, on obtient le codage d'identification suivant : 1232. Dans le cas de la figure 2 avec quatre caractères et donc trois niveaux de valeurs pour l'option B, on peut proposer 81 possibilités de codage. Dans le cas de la figure 1 avec huit caractères et trois niveaux, on offre 6561 possibilités de codage. On peut prévoir plus de profondeurs discrètes de gravure que dans ces exemples.

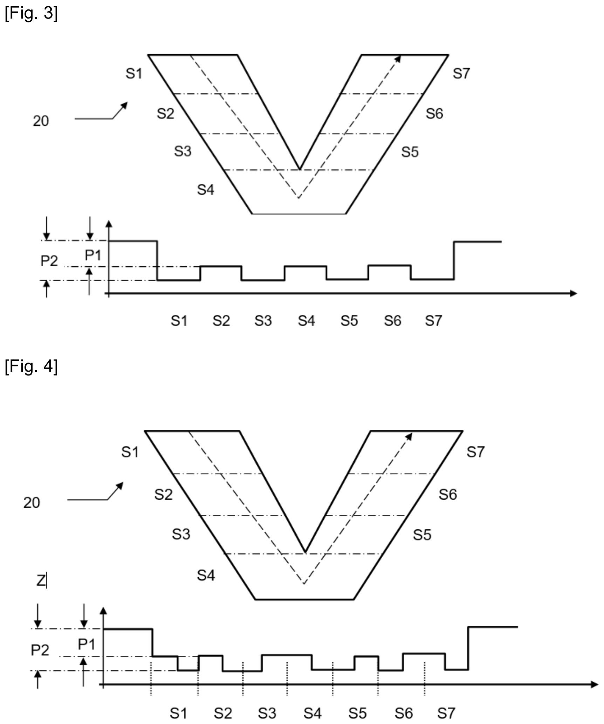

La figure 2 montre une marque gravée 20 ayant plusieurs signes visuels distincts et séparés, tandis que la figure 3 représente une deuxième mise en œuvre de gravure permettant de former un codage d'identification au sein d'une marque gravée 20 formée par un signe visuel unitaire. Ici, on a représenté un « V » figure 3, mais on peut prévoir toute sorte de signe unitaire visuel : un caractère, un logo, une forme géométrique quelconque... Le signe visuel unitaire de la figure 3 est divisé en sept secteurs différents S1 à S7, avec des lignes virtuelles de séparation. Dans cette mise en œuvre, chaque secteur S1 à S7 peut être gravé à une profondeur spécifique. On peut prévoir de former un codage d'identification binaire (mais on peut prévoir plus de niveaux de valeurs) en gravant chaque secteur S1 à S7 à la première profondeur de gravure P1 ou à la deuxième profondeur de gravure P2. En lisant les profondeurs selon la ligne de lecture indiquée figure 3, on peut alors reconstruire le codage d'identification, qui est 1010101 dans l'exemple donné. Une fois de plus, la différence de profondeur de gravure n'est pas perceptible pour l'utilisateur, si bien que l'aspect du signe unitaire visuel n'est pas affecté par le codage d'identification : il peut être apposé sur une marque gravée visible par l'utilisateur sans affecter la qualité perçue. On peut prévoir de limiter cette mise en œuvre sur des signes visuels qui présentent un point de départ simple à identifier (un caractère ouvert) pour ensuite reconstruire le codage d'identification en suivant un sens de lecture le long du caractère ouvert. Dans le cas d'un signe visuel « fermé », comme un O, un R, ou une boucle, on peut prévoir de définir d'une part un point de départ avec un marquage particulier, ou défini par rapport à un point de repère de la pièce extérieur à la marque gravée 20 et on peut prévoir d'autre part de définir un sens de lecture le long du signe visuel fermé. Ainsi le codage d'identification peut être reconstruit de manière fiable et répétable.

La figure 4 représente une troisième mise en œuvre de gravure permettant de former un codage d'identification, ici au sein d'une marque gravée 20 formée par un même signe visuel unitaire, mais cette mise en œuvre peut s'appliquer dans le cas de signes visuels distincts. Ici, on a représenté un « V » figure 4, mais on peut prévoir toute sorte de signe unitaire visuel : un caractère, un logo, une forme géométrique quelconque... Le signe visuel unitaire de la figure 4 est divisé en sept secteurs différents S1 à S7, avec des lignes virtuelles de séparation. Dans cette mise en œuvre, chaque secteur S1 à S7 peut être gravé à une profondeur spécifique.

En particulier, dans la mise en œuvre figure 4, le codage d'identification est basé sur les valeurs discrètes de la première profondeur P1 et de la deuxième profondeur P2, mais le codage d'identification est construit sur les changements de profondeur, c'est-à-dire sur la présence d'un flanc ou d'un front défini entre la première profondeur P1 et la deuxième profondeur P2. Selon l'exemple figure 4, un front ou un flanc descendant dans un secteur S1 à S7 définit une valeur « 0 », et un front ou un flanc montant dans un secteur définit une valeur « 1 ». Le codage d'identification figure 4 est donc 0010110. Selon l'exemple figure 4, on peut ignorer les changements de profondeur aux zones frontières délimitant les secteurs S1 à S7 (comme par exemple ici entre S1 et S2 et entre S5 et S6).

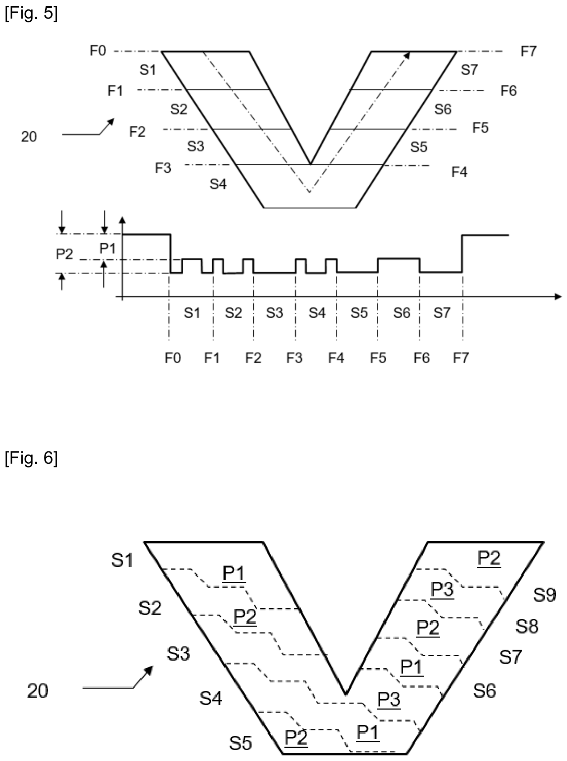

La figure 5 représente une quatrième mise en œuvre de gravure permettant de former un codage d'identification, ici au sein d'une marque gravée 20 formée par un même signe visuel unitaire, mais cette mise en œuvre peut s'appliquer dans le cas de signes visuels distincts. En particulier, dans la mise en œuvre figure 5, on propose de définir des zones frontières F1 à F7 sur la pièce d'horlogerie séparant des mailles formées par les secteurs S1 à S7, et on peut proposer de construire le codage d'identification en ne prenant en compte que les changements de profondeur au niveau des zones frontières F1 à F7.

Dans l'exemple de la figure 5, les zones frontières F1 à F7 séparent des secteurs S1 à S7 ménagés dans le signe visuel unitaire. Le premier front de gravure peut définir un point de départ (la zone frontière F0 par exemple), et ensuite un front montant de la deuxième profondeur de gravure P2 à la première profondeur de gravure P1 peut être considéré comme un premier niveau de valeur (0), et un front descendant de la première profondeur de gravure P1 à la deuxième profondeur de gravure P2 peut être considéré comme un deuxième niveau de valeur (1). Dans l'exemple de la figure 5, le codage d'identification est 010101. Bien qu'il y ait des variations intermédiaires de profondeur de gravure dans les secteurs S1, S2 et S4, ces changements ne sont pas pris en compte. La contrefaçon est rendue encore plus difficile. On peut mettre en œuvre aussi cette technique dans le cadre d'une marque gravée avec plusieurs caractères, et aussi avec trois niveaux de profondeur de gravure ou plus.

On peut considérer que la prise en compte du changement de profondeur est effectuée au niveau de la zone frontière considérée, ou à proximité dans un intervalle ou dans un espace géométrique adapté à la précision de l'outil de mesure de profondeur. On peut prévoir de considérer que la zone frontière présente, le long d'une direction de déplacement du profilomètre ou par rapport à une position théorique, une longueur ou une dimension de quelques microns à quelques dizaines de microns, ou bien une longueur ou une dimension de 10% à 30% de la profondeur mesurée, ou bien une longueur ou une dimension comprise entre une à cinq fois la sensibilité de l'appareil de mesure de profondeur. On peut prévoir que le premier secteur S1 présente une forme particulière, ou une profondeur particulière, ou un motif particulier qui permet de reconnaître le point de départ et de positionner, à partir de ce point de départ, les zones frontières à considérer.

La figure 6 représente une cinquième mise en œuvre de gravure permettant de former un codage d'identification, ici au sein d'un même signe visuel unitaire, mais cette mise en œuvre peut s'appliquer dans le cas de signes visuels distincts. Sur la figure 6, la marque gravée 20 formée par le signe visuel unitaire « V » est divisés en secteurs S1 à S9 séparés par des lignes formant un motif particulier. Dans l'exemple de la figure 6, trois profondeurs de gravure distinctes sont utilisées, mais le codage d'identification comprend aussi une reconnaissance du motif des lignes de séparation, ce qui complexifie encore les opérations de contrefaçon. Une fois de plus, les différences de profondeur de gravure ne sont pas perceptibles par l'utilisateur, si bien que l'aspect visuel n'est pas affecté.

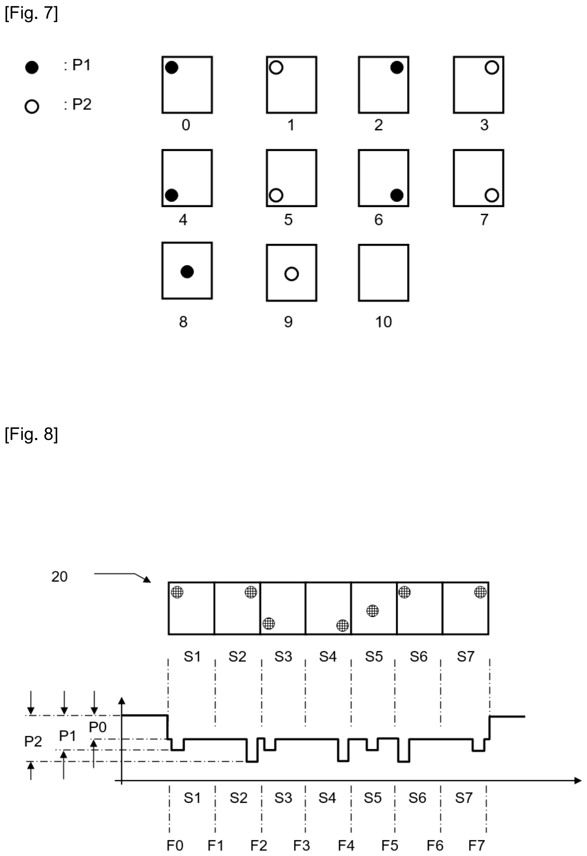

La figure 7 représente une sixième mise en œuvre de codage par gravure. Comme vu ci-dessus, la zone marquée peut être divisée en mailles, définies par exemple par un pas ou une période spatiale. Pour chaque maille, on peut prévoir de baser une première information de codage sur la position relative de la gravure dans la maille, et de baser une deuxième information de codage sur la profondeur de gravure ou sur le changement de profondeur de gravure ou encore sur le sens de changement de profondeur de gravure. Dans le cas d'une maille carrée, on peut, comme le montre la figure 7 choisir de considérer le coin supérieur gauche, le coin supérieur droit, le coin inférieur gauche, le coin inférieur droit, ou le centre : la maille carrée est découpée en cinq secteurs (on peut bien entendu prévoir de découper la maille en un nombre N de secteurs, comme par exemple 6, 9 ou 16 ou tout nombre entier de secteurs). Dans le cas où l'on prend en compte la profondeur de gravure P1 ou P2 pour décider si la zone considérée présente une valeur haute ou basse, on peut affecter une valeur de 0 à 9 pour la maille considérée, ce qui fait 5x2 = 10 possibilités plus une possibilité en cas d'absence de gravure sur toute la maille, soit onze possibilités en tout, selon l'exemple ci-dessous :
0 : coin supérieur gauche à P1,
1 : coin supérieur gauche à P2,
2 : coin supérieur droit à P1,
3 : coin supérieur droit à P2,
4 : coin inférieur gauche à P1,
5 : coin inférieur gauche à P2,
6 : coin inférieur droit à P1,
7 : coin inférieur droit à P2,
8 : centre à P1,
9 : centre à P2
10 : aucun changement de profondeur sur toute la maille.

La figure 8 montre une marque gravée 20, avec des zones prédéterminées définissant des mailles ou secteurs S1 à S7 à prendre en compte et délimitées par des zones frontières F0 à F7. Pour le secteur 1, on peut noter que la gravure est apposée dans le coin supérieur gauche avec une profondeur P1, pour le secteur 2, on peut noter que la gravure est apposée dans le coin supérieur droit avec une profondeur P2, pour secteur 3, on peut noter que la gravure est apposée dans le coin inférieur gauche avec une profondeur P1, pour le secteur 4, on peut noter que la gravure est apposée dans le coin inférieur droit avec une profondeur P2, pour le secteur 5, on peut noter que la gravure est apposée dans le centre avec une profondeur P1, pour le secteur 6, on peut noter que la gravure est apposée dans le coin supérieur gauche avec une profondeur P2, pour le secteur 7, on peut noter que la gravure est apposée dans le coin supérieur droit avec une profondeur P1. En pratique, on peut donc attribuer une valeur de codage à la maille en fonction de là ou intervient le changement de profondeur et en fonction de la profondeur de gravure.

Selon les valeurs indiquées figure 7, le code complet de la figure 8 est : 0347812. Chaque digit peut donc prendre une valeur entre 0 et 9 (et même 10 pour le cas où on prévoit de coder une maille sans gravure), pour sept secteurs, on a 11⁷ possibilités de codes, ce qui augmente notablement la complexité de codage. On peut bien entendu prendre d'autres formes de mailles, on peut aussi faire varier la taille des mailles, on peut choisir plus ou moins d'endroits prédéterminés ou prendre en compte la marque au sein d'une maille... On peut tout aussi bien prendre en compte un changement de profondeur plutôt que la profondeur, ou le sens du changement de profondeur (du plus profond au moins profond, ou du moins profond vers le plus profond...). On peut aussi prendre en compte trois profondeurs de gravures différentes ou plus.

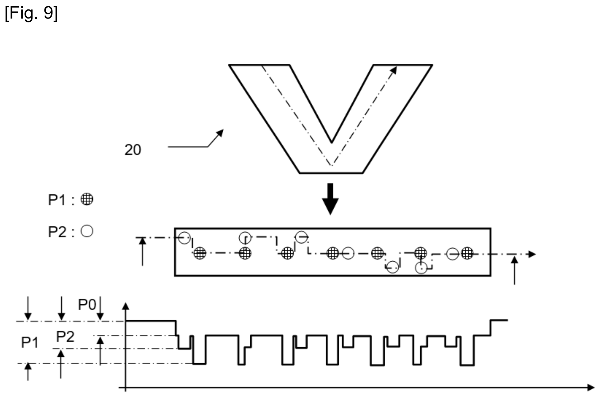

La figure 9 représente une septième mise en œuvre de gravure, dans laquelle la marque gravée 20 est une lettre « V » avec des premières zones marquées à une première profondeur P1 et des deuxième zones marquées à une deuxième profondeur P2. Dans cet exemple la zone marquée 20 est gravée à une profondeur de base P0 pour être visible à l'œil nu, comme le montre le signe « V » du haut de la figure 9, mais les premières zones marquées à une première profondeur P1 et des deuxième zones marquées à une deuxième profondeur P2 ne peuvent pas être distinguées à l'œil nu de la zone marquée 20 à la profondeur de base P0.

Toutefois, selon le sens de lecture indiqué en haut de la figure 9, on peut définir la zone marquée 20 comme une bande allongée représentée au milieu de la figure 9, sur laquelle sont représentées les premières zones marquées à une première profondeur P1 (cercles quadrillés) et des deuxièmes zones marquées à une deuxième profondeur P2 (cercles sans quadrillage). Les premières zones marquées à une première profondeur P1 (cercles quadrillés) et les deuxièmes zones marquées à une deuxième profondeur P2 (cercles sans quadrillage) peuvent donc être détectées par exemple avec un profilomètre laser ou un profilomètre optique. Dans cet exemple, la première profondeur P1 est supérieure à la deuxième profondeur P2.Dans cette septième mise en œuvre, on considère que chaque première zone marquée à une première profondeur P1 forme une marque de référence qui est reconnue par sa première profondeur P1 comme le montre la ligne de niveaux du bas de la figure 9, et que le codage d'identification est donné ou formé par la position relative de la deuxième zone marquée à la profondeur P2, par rapport à la première zone marquée à la première profondeur P1, dans un périmètre défini.

Ainsi, dès que l'on trouve une première zone marquée à la première profondeur P1, on cherche, dans un périmètre défini autour de la première zone marquée à la première profondeur P1, une deuxième zone marquée à la profondeur P2, puis on détermine sa position relative pour trouver le code spatial. La définition du périmètre peut par exemple être fonction de la position d'une deuxième zone marquée à la première profondeur P1.

Dans l'exemple de la figure 9, on peut utiliser le codage suivant, défini par rapport à la direction de lecture le long de la marque gravée 20 :
0 : deuxième zone marquée au dessus à gauche de la première zone marquée,
1 : deuxième zone marquée au dessus de la première zone marquée,
2 : deuxième zone marquée au dessus à droite de la première zone marquée,
3 : deuxième zone marquée à gauche de la première zone marquée,
4 : deuxième zone marquée à droite de la première zone marquée,
5 : deuxième zone marquée en dessous à gauche de la première zone marquée,
6 : deuxième zone marquée en dessous de la première zone marquée,
7 : zone marquée en dessous à droite de la première zone marquée,
8 : pas de deuxième zone marquée autour de la première zone marquée.

En conséquence, on peut baser la construction du codage d'identification sur la formation de la première zone marquée dans un premier temps et sur la formation de la deuxième zone marquée à un endroit relatif particulier comme décrit ci-dessus par rapport à la première zone marquée. Dans cet exemple, aucune maille prédéfinie n'est nécessaire, c'est le point de référence (la présence de la première zone marquée à la première profondeur P1) qui forme le référentiel pour chercher ensuite une deuxième zone marquée à la deuxième profondeur P2.

Dans le cas de l'exemple de la figure 9, on peut noter qu'il y a sept premières zones marquées, et le codage d'identification complet, construit selon le modèle ci-dessus, est 0124763.

Dans cet exemple de la figure 9, le point de référence (la première zone marquée) est reconnu sur la base d'une profondeur particulière P1, mais on peut prévoir de former et reconnaître le point de référence (la première zone marquée) sur la base d'une première différence de profondeur de gravure particulière entre deux niveaux ou deux altitudes de gravure. Il en va de même pour la deuxième zone marquée : dans cet exemple, cette deuxième zone marquée est formée ou reconnue sur la base de la deuxième profondeur de gravure P2, mais on pourrait envisager de la former ou de la reconnaître sur la base d'une deuxième différence de profondeur de gravure.

Dans cet exemple de la figure 9, le codage d'identification est construit exclusivement sur la position relative de la deuxième zone marquée (toujours gravée à la même profondeur) par rapport à la première zone marquée (toujours gravée à la même profondeur), mais on peut prévoir de compléter ou complexifier le codage d'identification (spatial), avec par exemple deux premières profondeurs de gravure P1-1 et P1-2 (ou plus) et/ou par exemple deux deuxièmes profondeurs de gravure P2-1 et P2-2 (ou plus).
Dans les exemples qui précèdent, la géométrie et/ou la dimension des marques peut être indifférente ou avoir une signification telle que symboliser la marque de référence dans l'exemple de la figure 9.

### Application industrielle

Une pièce d'horlogerie ou de joaillerie selon la présente invention, sa fabrication et/ou l'apposition du codage d'identification, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

En particulier, on peut noter que l'on peut prévoir plusieurs profondeurs de gravure (deux niveaux, trois niveaux ou plus). On peut prévoir que les différences de profondeur de gravure ne sont pas perceptibles, mais on peut toutefois prévoir de rendre certaines différences de profondeur de gravure visibles pour procurer un effet visuel.

En particulier, on peut prévoir que la couleur en fond de gravure soit identique sur toute la marque gravée portant le codage d'identification, mais on peut prévoir différentes couleurs sans affecter l'esprit de l'invention.

On peut prévoir de combiner ou cumuler les différentes mises en œuvre présentées sur une même pièce d'horlogerie ou de joaillerie.

## Revendications

1. Pièce d'horlogerie ou de joaillerie (10) comprenant au moins une marque gravée (20), **caractérisée en ce que** la marque gravée (20) comprend au moins :
- une première zone gravée à une première profondeur (P1),
- une deuxième zone gravée à une deuxième profondeur (P2),
dans laquelle :
- la première profondeur (P1) et la deuxième profondeur (P2) et/ou
- un changement de profondeur entre la première profondeur (P1) et la deuxième profondeur (P2),
forme(nt) des valeurs discrètes d'un codage d'identification de la pièce d'horlogerie ou de joaillerie (10),
dans laquelle la première profondeur (P1) et la deuxième profondeur (P2) présentent une différence de profondeur comprise dans une plage de valeurs allant de 50 µm à 15 µm.

2. Pièce d'horlogerie ou de joaillerie (10) selon la revendication 1 dans laquelle la première zone gravée et la deuxième zone gravée :
- sont formées dans une même matière de la pièce d'horlogerie ou de joaillerie (10), et/ou
- débouchent sur une même matière de la pièce d'horlogerie ou de joaillerie (10), et/ou
- présentent un fond de la même couleur de la pièce d'horlogerie ou de joaillerie (10), et/ou
- sont formées sur un même composant de la pièce d'horlogerie ou de joaillerie (10).

3. Pièce d'horlogerie ou de joaillerie (10) selon l'une des revendications 1 à 2, dans laquelle la marque gravée (20) comprend des signes visuels distincts, tels que des caractères ou logos distincts, et dans laquelle :
- la première zone gravée forme ou fait partie d'un premier signe visuel,
- la deuxième zone gravée forme ou fait partie d'un deuxième signe visuel.

4. Pièce d'horlogerie ou de joaillerie (10) selon l'une des revendications 1 à 3, dans laquelle la marque gravée (20) comprend au moins un signe visuel unitaire, tel qu'un caractère unitaire ou un logo unitaire, et dans laquelle la première zone gravée est adjacente à la deuxième zone gravée, la première zone gravée et la deuxième zone gravée formant au moins partiellement le signe visuel unitaire.

5. Pièce d'horlogerie ou de joaillerie (10) selon la revendication 4, dans laquelle la première zone gravée est séparée de la deuxième zone gravée par une démarcation suivant un motif prédéterminé formant un codage supplémentaire.

6. Pièce d'horlogerie ou de joaillerie (10) selon l'une des revendications 1 à 5, dans laquelle la marque gravée (20) présente un maillage spatial prédéterminé défini par des zones frontières (F1-F7) de mailles séparant des mailles de gravure, et dans laquelle le codage d'identification est défini par des changements de profondeur de gravure, et/ou par des sens de changement de profondeur de gravure, dans les zones frontières (F1-F7) de maille, et de préférence dans laquelle au moins une partie du codage d'identification est définie uniquement par des changements de profondeur, et/ou par des sens de changement de profondeur de gravure dans les zones frontières (F1-F7) de maille.

7. Pièce d'horlogerie ou de joaillerie (10) selon l'une des revendications 1 à 5, dans laquelle la marque gravée (20) présente un maillage spatial prédéterminé défini par des zones frontières (F1-F7) de mailles séparant des mailles de gravure, et dans laquelle une position relative dans chaque maille de la première zone gravée à une première profondeur (P1) et/ou de la deuxième zone gravée à une deuxième profondeur (P2) procure un codage supplémentaire.

8. Pièce d'horlogerie ou de joaillerie (10) selon la revendication 6 ou 7, dans laquelle le maillage spatial prédéterminé présente une maille de gravure de départ définie par :
- une surface de gravure prédéterminée de départ, et/ou
- une profondeur de gravure prédéterminée de départ et/ou
- une séquence de changements de profondeur de gravure prédéterminée de départ, et/ou
- un motif de gravure prédéterminé de départ.

9. Pièce d'horlogerie ou de joaillerie (10) selon l'une des revendications 1 à 8, dans laquelle :
- la première zone gravée forme une marque de référence,
- une position relative de la deuxième zone gravée par rapport à la première zone gravée procure au moins une partie du codage d'identification.

10. Pièce d'horlogerie ou de joaillerie (10) selon l'une des revendications 1 à 9, dans laquelle la marque gravée (20) comprend au moins une troisième zone gravée à une troisième profondeur (P3) formant une valeur discrète du codage d'identification de la pièce d'horlogerie ou de joaillerie (10).

11. Pièce d'horlogerie ou de joaillerie (10) selon l'une des revendications 1 à 10, dans laquelle la marque gravée (20) comprend :
- une pluralité de premières zones gravées à la première profondeur (P1) et séparées par au moins une deuxième zone gravée à la deuxième profondeur (P2), et/ou
- une pluralité de deuxièmes zones gravées à la deuxième profondeur (P2) et séparées par au moins une première zone gravée à la première profondeur (P1).

12. Pièce d'horlogerie ou de joaillerie (10) selon l'une des revendications 1 à 11, dans laquelle la première profondeur (P1) est distincte de la deuxième profondeur (P2).

13. Pièce d'horlogerie ou de joaillerie (10) selon l'une des revendications 1 à 12, dans laquelle la première zone gravée et/ou la deuxième zone gravée est formée par une gravure laser.

14. Pièce d'horlogerie ou de joaillerie (10) selon l'une des revendications 1 à 13, dans laquelle la première zone gravée et/ou la deuxième zone gravée est formée par une gravure par électroérosion.

15. Pièce d'horlogerie ou de joaillerie (10) selon l'une des revendications 1 à 14, dans laquelle la première zone gravée et/ou la deuxième zone gravée est formée par une opération de déformation plastique par forgeage ou pressage.

16. Pièce d'horlogerie ou de joaillerie (10) selon l'une des revendications 1 à 15, comprenant une pièce métallique et dans laquelle la première zone gravée et la deuxième zone gravée sont formées sur la pièce métallique.

17. Pièce d'horlogerie ou de joaillerie (10) selon l'une des revendications 1 à 16, dans laquelle la première zone gravée et la deuxième zone gravée sont formées sur une partie de la pièce d'horlogerie ou de joaillerie (10) visible par un utilisateur.

18. Pièce d'horlogerie ou de joaillerie (10) selon la revendication 17, dans laquelle le codage d'identification de la pièce d'horlogerie ou de joaillerie (10) formé par la première profondeur (P1) et la deuxième profondeur (P2) est invisible à l'œil nu pour l'utilisateur.

19. Procédé d'authentification d'une pièce d'horlogerie ou de joaillerie (10), comprenant les étapes consistant à :
- fournir une pièce d'horlogerie ou de joaillerie (10) selon l'une des revendications 1 à 18,
- faire une mesure de profondeur de gravure sur ou le long de la marque gravée (20), de sorte à identifier au moins une alternance de la première profondeur (P1) et la deuxième profondeur (P2) pour reconstruire un codage d'identification lu sur la pièce d'horlogerie ou de joaillerie (10),
- comparer le codage d'identification lu sur la pièce d'horlogerie ou de joaillerie (10) avec un codage d'identification attendu, et/ou rechercher le codage d'identification lu sur la pièce d'horlogerie ou de joaillerie (10) parmi des codages d'identification stockés dans une base de données.
